# EUROPEAN PATENT SPECIFICATION

(11) **EP 0 961 696 B1**
(45) Date of publication and mention of the grant of the patent: **24.07.2002**
(21) Application number: 96927860.5
(22) Date of filing: 15.08.1996
(51) Int. Cl.: B60C 11/14, B29D 30/60

(54) **METHOD AND EQUIPMENT FOR PROVIDING HARD GRANULES INTO TYRE TREADS**
VERFAHREN UND VORRICHTUNG ZUM VERSEHEN VON HARTGRANULAT IN REIFENLAUFFLÄCHEN
PROCEDE ET EQUIPEMENT POUR INCORPORER DES GRANULES DURS DANS LA BANDE DE ROULEMENT DE PNEUMATIQUES

(30) Priority: 16.08.1995 IS 430395
(43) Date of publication of application: 08.12.1999
(73) Proprietor: Jonsson, Olafur, 220 Hafnarf Jordur (IS); Geirhardsson, Helgi, 210 Gardabaer (IS)
(72) Inventor: Jonsson, Olafur, 220 Hafnarf Jordur (IS); Geirhardsson, Helgi, 210 Gardabaer (IS)
(74) Representative: Thierry-Carstensen, Ole Jean
(86) International application number: IS9600005
(87) International publication number: WO9706967

(56) References cited:
- WO-A-94/25298
- DE-A- 2 726 690
- US-A- 2 513 064

## Description

### Technical field.

The invention concerns a method and equipment for providing hard granules into tyre tread bodies and furthermore into sundry rubber strips and tread stock, whereby rubber stock is extruded into a rubber tread band of a suitable shape which is rolled under control, in a suitable thickness and number of layers, in a circular process over a pre-treated tyre or other material (object) which is subsequently patterned and vulcanised.

Vehicle tyres consist, broadly speaking, of a fibre-reinforced carcass (bound with wire or rope) which forms the inner layer of the tyre, and an outer wearing layer which is made of vulcanised rubber or comparable material and is profiled into a pattern over the reinforced tyre carcass.

Tyres are manufactured according to the above specification but retreading of them is also a familiar process. When the pattern of the wearing surface (the tread) has worn down so far that it ceases to serve its function, the remainder of the wearing surface is buffed and a new tread is placed over the fibre-reinforced carcass. One way in which this is done is by overlaying the circular path of the tyre carcass with an extruded rubber tread band of a suitable thickness, which is then profiled into a new pattern and vulcanised.

The role of the outer layer of the tyre is to form a resistant and wearing surface against the surface on which the vehicle is driven. Many methods are known for increasing tyre resistance and reducing skidding of vehicles on a slippery surface such as ice or snow. Particular mention should be made of spikes which are driven into the tyres after conventional manufacture, and snow chains.

### Background.

In recent years and decades, ideas have been proposed for applying and/or anchoring various types of material into or onto the wearing surface of types.

Methods are known for providing hard granules into the tread body of a tyre in order to increase its resistance on a slippery surface, in particular snow and ice. The US Patent No. 2.672.910 from 1948 describes the production of a tyre in which coated hard granules are mixed with the raw rubber which is used for production of the tyre. By coating the granules improved bondage is obtained with the rubber body.

Furthermore, methods have been developed for re-treading. A worn tyre is pre-treated (buffed) to prepare the rolling of a new tread body onto it. A new layer of rubber is wrapped around the circular process of the tyre and then profiled into a pattern, cf. German Patent DE 4,025459 A1, which concerns general re-treading of used tyres.

DE-A-27 26 290 describes tyres having friction increasing bodies vulcanized into the tread rubber. The tread can be made of two or more layers of rubber of which some or all layers are incorporated friction increasing bodies.

European Patent Applications EP 0 454.025 A1 and EP 442.155 A1 furthermore describe methods for production of tyres and/or re-treading, whereby coated hard granules are mixed into the raw rubber before extrusion and rolling on the pre-treated tyre.

The above patents describe methods and equipment for production of treads and tyres. They describe the providing of hard granules into the tread body of a tyre in order to increase the tyre's resistance against the driving surface and to reduce vehicle sliding on ice or snow.

None of the aforementioned methods or equipment for applying hard granules has achieved widespread acceptance, as a result of shortcomings of these methods in the production process.

The disadvantage of these methods has been the cost involved in mixing the hard granules into the rubber body before extrusion, for reasons including substantial wear and tear to the equipment.

The required amount of hard granules must be considered excessive if they are mixed with the entire raw material body. Nor has it proved possible to control the final location of the hard granules in the wearing surface of the tyre, which must also be considered a disadvantage.

Yet another disadvantage is the inadequate bondage yielded between the fibre-reinforced carcass and the granulated tread body, since the granules show a tendency to impair the bondage between the carcass and the wearing surface. Furthermore, mixing granules into the entire rubber body is considered to reduce the flexibility of the tyre carcass.

### Disclosure of Invention.

The aim of the invention is to present a method and equipment which are at once straightforward in use and production, and economical to operate, and which also enable control to be maintained over the mixing and location of hard granules in the wearing surface of tyres. One of the major advantages of the method for which the patent is being applied is that it does not require extra labour for re-treading of tyres.

By manufacturing tyres and other treads with a mixture of hard granules, the following aims are achieved:
· Increased vehicle resistance to slippery surfaces.
· Reduced road wear compared with the use of spiked tyres.
· Enhanced general driving properties compared with the use of spiked tyres or snow chains.

These properties have been confirmed in tests by VTI of Sweden (Swedish Public Roads Administration) and BAST of Germany (German Public Roads Administration or Bundesanstalt für Stassenwesen).

These aims are achieved by the invention's distinctive feature of distributing the hard granules according to a predetermined configuration onto at least part of the surface of the extruded rubber tread band before the next layer is rolled in a circular process onto the pre-treated tyre, using dedicated equipment so that the granules will be located into the patterned wearing surface of the tyre after profiling and vulcanisation.

A further distinctive feature of the invention is that the hard granules are distributed according to a predetermined configuration onto at least part of the surface of the extruded rubber tread band, thereby allowing the extent to which the tread band is covered with hard granules to be controlled, and likewise the distribution of the granules into predetermined parts of the patterned and vulcanised tyre.

A further distinctive feature of the invention is that 0.01 to 0.1 gm of hard granules are distributed onto each square centimetre of rubber tread band which is covered with hard granules, with each granule of the diameter range 1-3 mm, particularly 1.5-20mm.

Furthermore, a distinctive feature of the invention is that the hard granules are distributed according to a predetermined configuration onto the part of the surface of the extruded rubber tread bend which, after rolling onto the pre-treated tyre carcass surface, forms the outer surface of the vulcanised and patterned tyre, and that the granule distribution equipment is located after the extruder in the production process and above the extruded rubber tread band, and in front of the tyre, and that the granules are distributed onto the rubber tread band before it is rolled on to the tyre.

The equipment is unique insofar as it consists of a funnel into which the hard granules are fed before distribution, and a feeder (revolving rubber-clad cylinder which feeds a suitable quantity of granules from the funnel onto a track for controlling their delivery onto the rubber tread band, and the distribution device (the track) can be adjusted to control the direction and speed at which the granules are delivered onto the extruded rubber tread band and match as closely as possible the direction and speed of the band itself, and the quantity of granules fed and distributed from the funnel is controlled by a feeder door and by the speed of the cylinder, thereby controlling that the granules are located on the tread band at a suitable density.

Much research has been conducted into the properties of tyres which are produced using the new method described above. Very thorough testing by BAST of Germany has convincingly demonstrated that road wear caused by tyres with hard granules is greater than that caused by "winter tyres" but considerably less than the average road wear caused by 9 types of spiked tyre. Tests at BAST revealed that, setting road wear caused by nailed tyres at a reference point of 100%, wear caused by the above-mentioned hard-granule tyres measures 7% and that caused by winter tyres 2%.

Tests conducted by the Swedish Public Roads Administration of Linköping show that hard-granule tyres clearly displayed much better road-holding properties under slippery conditions than the same type of tyre without hard granules. The tests also showed that hard-granule tyres generally display better road-holding properties than spiked tyres when rolling along the road surface. This is a particular advantage, for example, on bends and where anti-braking systems prevent the wheels from locking completely.

In all likelihood, many types of hard granules may be used for mixing. The trials which have been made have used granules of SiC (silicon carbide, "carborundum") and Al₂O₃ (aluminium oxide), which have been coated with familiar bonding materials and/or adhesives.

### Brief Description of Drawings.

The invention is described in more detail below, with reference to the enclosed illustrations where:
Fig. 1 shows equipment for retreading of tyres and for mixing of hard granules into the treads, side view;
Fig. 2 shows equipment for retreading of tyres and for mixing of hard granules into the treads, top view;
Fig. 3 shows details of the equipment for mixing and distribution of hard granules into the treads;
Figurs. 4a and 4b shows details of the track which controls the delivery of the hard granules onto the rubber tread band;
Fig. 5 shows a cross-section of the tyre with hard granules mixed into the outermost layer of the tread;
Fig. 6 shows the tyre pattern according to Fig. 5, top view;
Fig. 7 shows details of the rolling of the rubber tread band under the tyre treading process;
Fig. 8 shows details of the rolling of the rubber tread band (6) under the tyre treading process and the location of the hard granules (25) between the layers of the rubber tread band.

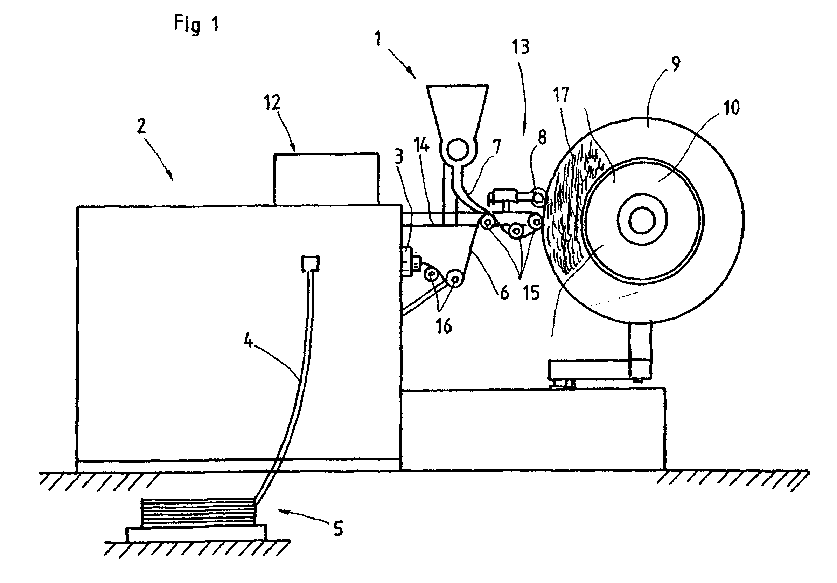

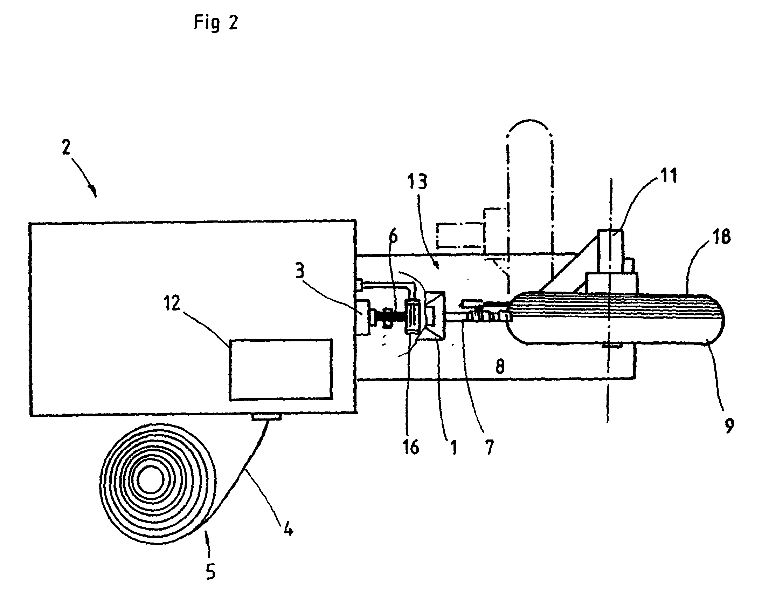

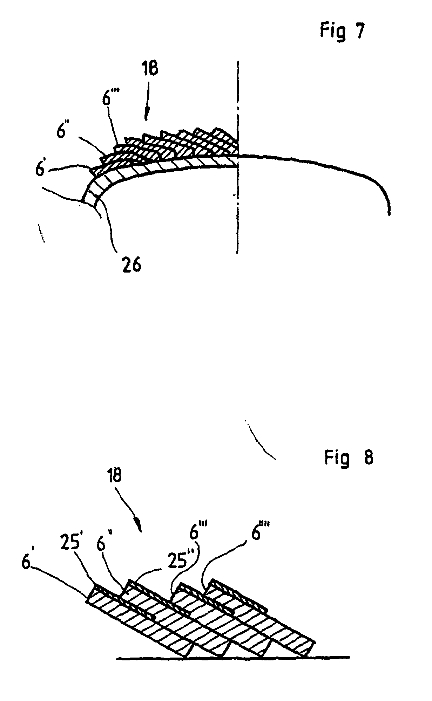

Figs. 1 and 2 show conventional equipment which is used for treading of tyres. Fig. 1 shows a side view of the equipment, and Fig. 2 a top view. The equipment has been supplemented by the addition of a device for locating hard granules into the tread body. The equipment consists of an extruder (2) which produces a thin, elastomer rubber band (6) from the rubber stock (5). The rubber stock is drawn in a thick band (4) into the extruder (2) where it is processed and extruded through a shaping head (3) in the form of a relatively thin extruded rubber tread band (6). The tread band is drawn onwards over and under control wheels (16) and onwards again over and under a second pair of control wheels (15) until it is eventually rolled onto the pre-treated tyre (9, 17). Part of the control wheel configuration (15) is or may be assembled from many thinner discs, like the pressure roller (8) which presses the rubber tread band (6) onto the tyre. The tyre is attached to a device which, on the one hand, rotates the tyre around its axis (11) at the same time as the tread band is rolled in a circular process onto the tyre, and, on the other hand, rotates slightly about a vertical axis, which shifts the alignment of the pre-treated tyre relative to the rolling device (13). Thus it is possible to roll the rubber tread band (6) in layers which overlap in the circular process of the entire tyre (18). Between the extruder (2) and the tyre (9) a device (1) is fitted for applying of the hard granules on to the tread band. This device (1) is attached to an arm (14) which extends from the same extruder (2) and holds some of the control wheels (15) and pressure roller (8). Of course, the device may also stand alone. Its function is to distribute hard granules onto the tread band before it is rolled onto the tyre, or at any stage before the next layer of tread band is rolled on top of it (see Figs. 7 and 8).

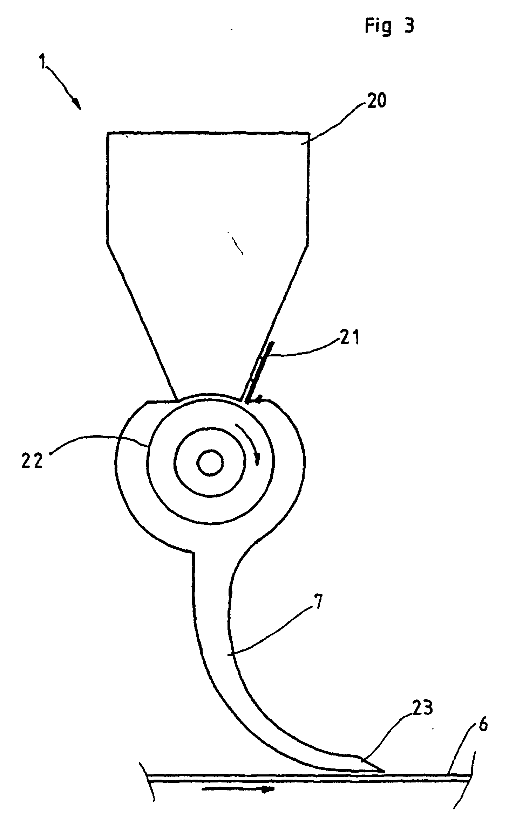

Fig. 3 shows the device (1) whose function is to apply or locate the hard granules into or onto the rubber tread band (6). The device consists of a funnel (20) into which the hard granules are fed before distribution, and a feeder (21,22) which feeds a controlled quantity of hard granules from the funnel. In its simplest form, the feeder is a revolving cylinder (22) which is located directly below the funnel (20) and pulls out the lowest granules from the funnel under the door (21), or a similar device for controlling the amount fed through. The cylinder transports the granules until they drop into the control track (7), which curves in the direction of the tread band (6), and then to the distributor head (23) at the end of the track which controls the application of the hard granules to the tread band.

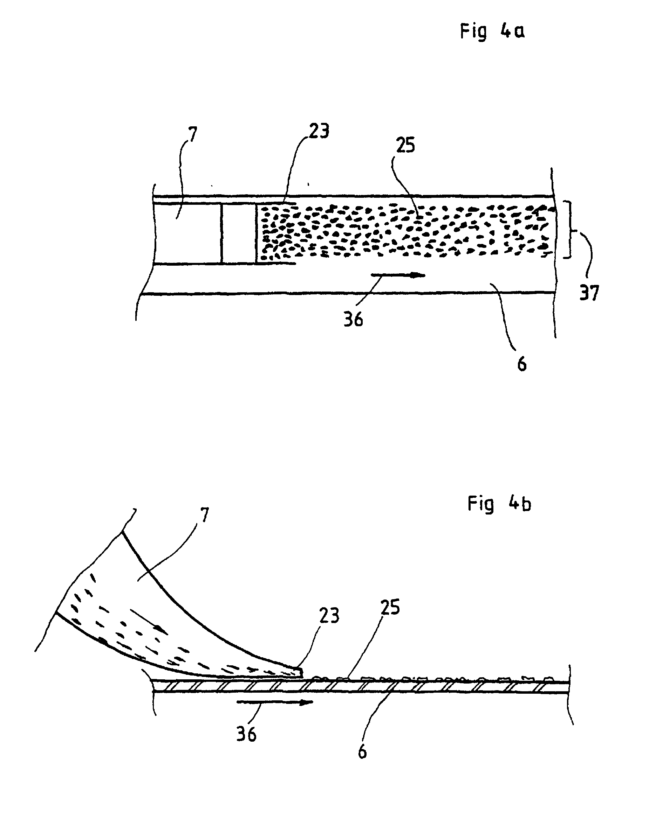

Figs. 4a and 4b show details of the application of the granules to the tread band. The tread band (6) moves lengthwise (36) and at the same time the granules (25) pass out of the distribution head (23) of the track (7), at a speed synchronised as closely as possible to that of the rubber tread band (6). The size (width) and exact location of the distribution head (23) controls the application of the granules, so that they can be applied to a section (37) of the tread band as shown, or to all of it.

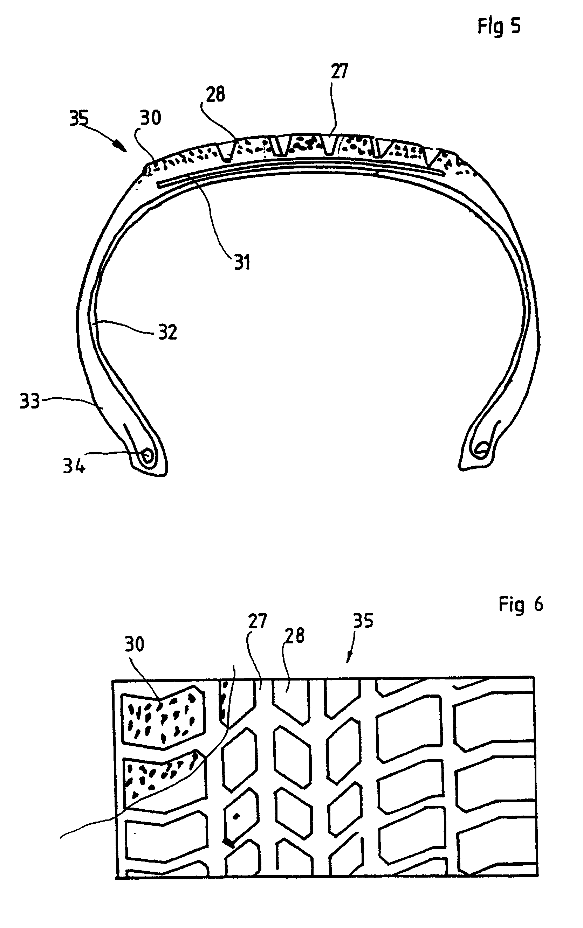

Fig. 5 shows a cross-section of the vulcanised and patterned tyre (35) and the location of the hard granules (25) in the tread (27). The granules are embedded in the outermost part (28) of the rubber overlay.

Fig. 6 shows how the granules (25) lie in the pattern (28) of the tyre (35).

Fig. 7 shows how the circular rubber tread band (18) is rolled in layers (6', 6", 6"') and onto the pre-treated tyre carcass (26). Each layer partly overlaps with the next, depending upon the way that the tread band is rolled on the circular process of the tyre.

Fig. 8 shows details of the rolling of the rubber tread band (18), where each layer partly overlaps with the next (6', 6", 6"', 6""), and furthermore the application of the hard granules between the layers of the tread band (25', 25"...).

The invention described above is not confined to precisely those details which have been specified, but can be elaborated upon in many ways without deviating from the central concept.

## Claims

1. A method for providing hard granules into tyre tread bodies and into sundry rubber strips and treads, whereby a rubber stock is extruded into a rubber tread band (6) of a suitable shape, which is rolled under control, in a suitable thickness and number of layers, in a circular process onto a pre-treated tyre (9), or other material which is subsequently patterned and vulcanised, and is **characterised by** distributing the hard granules (25) according to a predetermined configuration onto the surface of the extruded rubber tread band (6) before the next layer of the tread band is rolled onto the pre-treated tyre (9), using dedicated equipment (1) so that the granules (25) will be located into the patterned wearing surface (35) of the tyre after profiling and vulcanisation.

2. A method for providing hard granules into tyre tread bodies, according to Claim 1, which is **characterised by** distributing the hard granules (25) according to a predetermined configuration onto at least part of the surface (37) of the extruded rubber tread band (6), thereby allowing the extent to which the tread band is covered with hard granules to be controlled, and likewise controlling the distribution of the granules into predetermined parts of the wearing surface of the patterned and vulcanised type.

3. A method for providing hard granules into tyre tread bodies, according to Claims 1 and 2, which is **characterised by** distributing 0.01 to 0.1 gm of hard granules per square centimetre of rubber tread band which is covered with hard granules.

4. A method for providing hard granules into tyre tread bodies, according to Claims 1, 2 and 3, which is **characterised by** each granule being of the diameter range 1-3 mm and in particular 1.5-2.0 mm.

5. A method for providing hard granules into tyre tread bodies, according to Claims 1-4, which is **characterised by** distributing the hard granules according to a predetermined configuration onto the part of the surface of the extruded rubber tread band (6) which, after it has been rolled onto the pre-treated tyre carcass, forms the outermost layer (28) of the patterned and vulcanised tyre.

6. Equipment for providing hard granules into tyre tread bodies, and furthermore into sundry rubber strips and treads, whereby rubber stock (4) is mixed and shaped in an extruder (2) into tread bands (6) and is rolled under control, in a suitable thickness and shape and number of layers, in a circular process onto a pre-treated tyre (9), or other material which is subsequently patterned and vulcanised and whereby the tread band is rolled onto the tyre carcass as the tyre is turned, and is **characterised by** locating the equipment (1) after the extruder (2) in the production process and above the rubber tread band (6) which is being extruded from it.

7. Equipment for providing hard granules into tyre tread bodies, according to Claim 6, which is **characterised by** locating the equipment (1) after the extruder (2) in the production process and in front of the tyre (9) and before the rubber tread band is rolled onto the tyre.

8. Equipment for providing hard granules into tyre tread bodies, according to Claims 6 and 7, which is **characterised by** the equipment (1) consisting of a funnel (20) into which the hard granules (25) are fed before distribution, and a feeder (revolving cylinder and a door) (21, 22) which feeds a suitable quantity of granules from the funnel onto a track (7,23) in order to control the application of the granules onto the rubber tread band (6).

9. Equipment for providing hard granules into tyre tread bodies, according to Claims 6, 7 and 8, which is **characterised by** the fact that the distribution device (track) (7,23) can be adjusted to match the direction and speed at which the granules are placed on the rubber tread band as closely as possible with the direction and speed of the tread band itself, thereby controlling the distribution of the granules (25) onto the tread band (6).

10. Equipment for providing hard granules into tyre tread bodies, according to Claims 6-9, which is **characterised by** a revolving cylinder (22) which is clad with a rubber surface for feeding and distributing granules from the funnel (20) under the door (21).

11. Use of tyre tread bands with hard granules which are produced by the method and equipment according to Claims 1-10 in the manufacture of tyres.

12. Tyre comprising a tread band with hard granules which is produced by the method and equipment according to Claims 1-10.

## Patentansprüche

1. Verfahren zum Versehen von Reifenlaufflächen-Körpem und verschiedenen Gummistreifen sowie Laufflächen mit Hartgranulatpartikeln, wobei Gummimaterial zu einem eine geeignete Form aufweisenden Gummi-Laufflächenband (6) extrudiert wird, das in einer geeigneten Dicke und Lagenanzahl in einem zirkularen Verfahren gesteuert auf einen vorbehandelten Reifen (9) oder ein anderes Material aufgewickelt wird, das nachträglich mit einem Profil versehen und vulkanisiert wird, **gekennzeichnet durch** Aufbringen der Hartgranulatpartikel (25) gemäß einer vorbestimmten Konfiguration auf die Oberfläche des extrudierten Gummi-Laufflächenbands (6), bevor die nächste Lage des Laufflächenbands auf den vorbehandelten Reifen (9) unter Verwendung einer dafür geeigneten Vorrichtung (1) derart aufgewickelt wird, dass die Granulatpartikel (25) in der profilierten Verschleißschicht (35) des Reifens nach der Profilbildung und der Vulkanisation fixiert werden.

2. Verfahren zum Versehen von Reifenlaufflächen-Körpern mit Hartgranulatpartikeln gemäß Anspruch 1, **gekennzeichnet durch** Aufbringen der Hartgranulatpartikel (25) gemäß einer vorbestimmten Konfiguration auf mindestens einen Abschnitt der Oberfläche (37) des extrudierten Gummi-Laufflächenbands (6), wodurch es gestattet wird, das Ausmaß, mit dem das Laufflächenband mit Hartgranulatpartikeln bedeckt wird, zu steuern und gleichermaßen die Verteilung der Granulatpartikel in vorbestimmte Abschnitte der Verschleißschicht des profilierten und vulkanisierten Reifens zu steuern.

3. Verfahren zum Versehen von Reifenlaufflächen-Körpern mit Hartgranulatpartikeln gemäß den Ansprüchen 1 und 2, **gekennzeichnet durch** das Aufbringen von 0,01 bis 0,1 g Hartgranulatpartikel pro cm² des Gummi-Laufflächenbands, das mit Hartgranulatpartikeln bedeckt wird.

4. Verfahren zum Versehen von Reifenlaufflächen-Körpern mit Hartgranulatpartikeln gemäß den Ansprüchen 1, 2 und 3, **dadurch gekennzeichnet, dass** jedes Granulat-Partikel einen Durchmesser im Bereich von 1-3 mm und insbesondere von 1,5-2,0 mm aufweist.

5. Verfahren zum Versehen von Reifenlaufflächen-Körpern mit Hartgranulatpartikeln gemäß den Ansprüchen 1-4, **gekennzeichnet durch** Aufbringen der Hartgranulatpartikel gemäß einer vorbestimmten Konfiguration auf den Teil der Oberfläche des extrudierten Gummi-Laufflächenbands (6), der die äußerste Lage (28) des profilierten und vulkanisierten Reifens bildet, nachdem dieser auf den vorbehandelten Reifenunterbau aufgewickelt wurde.

6. Vorrichtung zum Versehen von Reifenlaufflächen-Körpern und ferner von verschiedenen Gummistreifen sowie Laufflächen mit Hartgranulatpartikeln, wobei Gummimaterial (4) gemischt und in einem Extruder (2) zu Laufflächenbändern (6) geformt wird sowie in einer geeigneten Dicke und Form sowie Lagenanzahl in einem zirkularen Verfahren gesteuert auf einen vorbehandelten Reifen (9) oder ein anderes Material aufgewickelt wird, das nachträglich mit einem Profil versehen und vulkanisiert wird, wobei das Laufflächenband auf den Reifenunterbau aufgewickelt wird, während der Reifen gedreht wird, **gekennzeichnet durch** die Anordnung der Vorrichtung (1) nach dem Extruder (2) in dem Produktions-Prozess und oberhalb des Gummi-Laufflächenbands (6), das aus diesem extrudiert wird.

7. Vorrichtung zum Versehen von Reifenlaufflächen-Körpern mit Hartgranulatpartikeln gemäß Anspruch 6, **gekennzeichnet durch** die Anordnung der Vorrichtung (1) nach dem Extruder (2) in dem Produktions-Prozess und vor dem Reifen (9) sowie bevor das Gummi-Laufflächenband auf den Reifen aufgewickelt wird.

8. Vorrichtung zum Versehen von Reifenlaufflächen-Körpern mit Hartgranulatpartikeln gemäß den Ansprüchen 6 und 7, **dadurch gekennzeichnet dass** die Vorrichtung (1) einen Trichter (20), in den die Hartgranulatpartikel (25) vor dem Aufbringen eingespeist werden, und eine Zufuhreinrichtung (rotierender Zylinder und ein Ausgang) (21,22) umfasst, die eine geeignete Granulatpartikelmenge aus dem Trichter auf eine Führungsbahn (7,23) führt, um das Aufbringen der Granulatpartikel auf das Gummi-Laufflächenband (6) zu steuern.

9. Vorrichtung zum Versehen von Reifenlaufflächen-Körpern mit Hartgranulatpartikeln gemäß den Ansprüchen 6, 7 und 8, **gekennzeichnet durch** die Tatsache, dass die Aufbringvorrichtung (Führungsbahn) (7,23) ausgerichtet werden kann, um die Richtung und Geschwindigkeit, bei welchen die Granulatpartikel auf dem Gummi-Laufflächenband plaziert werden, so genau wie möglich an die Richtung und Geschwindigkeit des Laufflächenbands selbst anzupassen, wodurch das Aufbringen der Granulatkörper (25) auf das Laufflächenband (6) gesteuert wird.

10. Vorrichtung zum Versehen von Reifenlaufflächen-Körpern mit Hartgranulatpartikeln gemäß den Ansprüchen 6-9, **gekennzeichnet durch** einen rotierenden Zylinder (22), der mit einer Gummioberfläche zum Führen und Aufbringen der Granulatpartikel aus dem Trichter (20) unter dem Ausgang (21) umhüllt ist.

11. Verwendung von Reifenlaufflächenbändern mit Hartgranulatpartikel, die nach dem Verfahren und der Vorrichtung gemäß den Ansprüchen 1-10 in der Reifen-Produktion hergestellt sind.

12. Reifen, umfassend ein Laufflächenband mit Hartgranulat, der nach dem Verfahren und der Vorrichtung gemäß den Ansprüchen 1-10 hergestellt ist.

## Revendications

1. Procédé destiné à incorporer des granulés durs dans des corps de bande de roulement de pneumatique et dans diverses bandes en caoutchouc et bandes de roulement, de sorte qu'une matière première en caoutchouc est extrudée en une bande de roulement en caoutchouc (6) d'une forme appropriée, qui est roulée sous commande, avec une épaisseur et un nombre de couches appropriés, dans un processus circulaire sur un pneumatique prétraité (9), ou une autre matière qui est ensuite dessinée et vulcanisée, et est **caractérisé par** le fait de répartir les granulés durs (25) selon une configuration prédéterminée sur la surface de la bande de roulement en caoutchouc extrudé (6) avant que la couche suivante de la bande de roulement soit roulée sur le pneumatique prétraité (9), en utilisant un équipement dédié (1) de telle sorte que les granulés (25) se trouvent dans la surface d'usure destinée (35) du pneumatique après profilage et vulcanisation.

2. Procédé destiné à incorporer des granulés durs dans des corps de bande de roulement de pneumatique selon la revendication 1, qui est **caractérisé par** le fait de répartir les granulés durs (25) suivant une configuration prédéterminée sur au moins une partie de la surface (37) de la bande de roulement en caoutchouc extrudé (6), en permettant ainsi à l'étendue sur laquelle la bande de roulement est recouverte avec les granulés durs d'être commandée, et en commandant de la même manière la distribution des granulés dans des parties prédéterminées de la surface d'usure du pneumatique dessiné et vulcanisé.

3. Procédé destiné à incorporer des granulés durs dans des corps de bande de roulement de pneumatique selon les revendications 1 et 2, qui est **caractérisé par** le fait de répartir 0,01 à 0,1 gramme de granulés durs par centimètre carré de bande de roulement en caoutchouc qui est recouverte avec des granulés durs.

4. Procédé destiné à incorporer des granulés durs dans des corps de bande de roulement de pneumatique selon les revendications 1, 2 et 3, qui est **caractérisé par** chaque granulé qui est de la plage de diamètre de 1 à 3 mm et en particulier de 1,5 à 2,0 mm.

5. Procédé destiné à incorporer des granulés durs dans des corps de bande de roulement de pneumatique selon les revendications 1 à 4, qui est **caractérisé par** le fait de répartir les granulés durs selon une configuration prédéterminée sur la partie de la surface de la bande de roulement en caoutchouc extrudé (6) qui, après qu'elle ait été roulée sur la carcasse de pneumatique prétraitée, forme la couche la plus à l'extérieur (28) du pneumatique dessiné et vulcanisé.

6. Equipement destiné à incorporer des granulés durs dans des corps de bande de roulement de pneumatique, et par ailleurs dans diverses bandes en caoutchouc et bandes de roulement, de sorte que la matière première en caoutchouc (4) est mélangée et mise en forme dans une extrudeuse (2) en bandes de roulement (6) et est roulée sous commande, à une épaisseur et une forme et un nombre de couches appropriés, dans un processus circulaire sur un pneumatique prétraité (8), ou une autre matière qui est ensuite dessinée et vulcanisée et de telle sorte que la bande de roulement est roulée sur la carcasse de pneumatique lorsque le pneumatique est entraîné en rotation, et est **caractérisé par** le fait de disposer l'équipement (1) après l'extrudeuse (2) dans le processus de fabrication et au-dessus de la bande de roulement en caoutchouc (6) qui est extrudée de celle-ci.

7. Equipement destiné à incorporer des granulés durs dans des bandes de roulement de pneumatique, selon la revendication 6, qui est **caractérisé par** le fait de disposer le (1) après l'extrudeuse (2) dans le processus de fabrication et en avant du pneumatique (8) et avant que la bande de roulement en caoutchouc soit roulée sur le pneumatique.

8. Equipement destiné à incorporer des granulés durs dans des bandes de roulement de pneumatique, selon les revendications 6 et 7, qui est **caractérisé par** l'équipement (1) qui se compose d'un entonnoir (20) dans lequel les granulés durs (25) sont délivrés avant distribution, et un dispositif d'alimentation (cylindre en rotation et trappe) (21, 22) qui délivre une quantité appropriée de granulés depuis l'entonnoir sur une piste (7, 23) afin de commander l'application des granulés sur la bande de roulement en caoutchouc (6).

9. Equipement destiné à incorporer des granulés durs dans des bandes de roulement de pneumatique, selon les revendications 6, 7 et 8, qui est **caractérisé par le fait que** le dispositif de distribution (piste) (7, 23) peut être ajusté afin de faire correspondre la direction et la vitesse à laquelle les granulés sont placés sur la bande de roulement en caoutchouc aussi près que possible avec la direction et la vitesse de la bande de roulement elle-même en commandant ainsi la distribution des granulés (25) sur la bande de roulement (6).

10. Equipement destiné à incorporer des granulés durs dans des bandes de roulement de pneumatique, selon les revendications 6 à 9, qui est **caractérisé par** un cylindre en rotation (22) qui est recouvert avec une surface de caoutchouc afin de délivrer et distribuer les granulés depuis l'entonnoir (20) sous la trappe (21).

11. Utilisation de bandes de roulement de pneumatique avec des granulés durs qui sont fabriquées par le procédé et l'équipement selon les revendications 1 à 10 dans la fabrication de pneumatiques.

12. Pneumatique comportant une bande de roulement avec des granulés durs qui est fabriquée par le procédé et l'équipement selon les revendications 1 à 10.
